# EUROPEAN PATENT SPECIFICATION

(11) **EP 3 407 192 B1**
(45) Date of publication and mention of the grant of the patent: **24.03.2021**
(21) Application number: 17805796.4
(22) Date of filing: 27.05.2017
(51) Int. Cl.: G06F 9/50, G06F 9/445, G06F 8/61

(54) **METHOD FOR ASSIGNING INSTALLATION TASK AND MOBILE TERMINAL**
VERFAHREN ZUR ZUWEISUNG VON INSTALLATIONSAUFGABEN UND MOBILES ENDGERÄT
PROCÉDÉ D'ATTRIBUTION DE TÂCHE D'INSTALLATION ET TERMINAL MOBILE

(30) Priority: 31.05.2016 CN 201610380701
(43) Date of publication of application: 28.11.2018
(73) Proprietor: GUANGDONG OPPO MOBILE TELECOMMUNICATIONS CORP., LTD., Wusha, Chang'an Dongguan, Guangdong 523860 (CN)
(72) Inventor: ZENG, Yuanqing, Dongguan, Guangdong 523860 (CN)
(74) Representative: Mewburn Ellis LLP
(86) International application number: PCT/CN2017/086446
(87) International publication number: WO 2017/206851

(56) References cited:
- CN-A- 1 811 716
- CN-A- 101 009 583
- CN-A- 101 770 385
- CN-A- 102 917 077
- CN-A- 103 324 508
- CN-A- 106 095 567
- US-A1- 2013 103 956
- US-B1- 8 972 975
- JAEHWAN LEE ET AL: "Decentralized resource management for multi-core desktop grids", PARALLEL&DISTRIBUTED PROCESSING (IPDPS), 2010 IEEE INTERNATIONAL SYMPOSIUM ON, IEEE, PISCATAWAY, NJ, USA, 19 April 2010 (2010-04-19), pages 1-11, XP031679806, ISBN: 978-1-4244-6442-5

## Description

### TECHNICAL FIELD

This disclosure relates to the field of mobile terminals, and particularly to a method for assigning an installation task and a mobile terminal.

### BACKGROUND

At present, an increasing number of applications, that can implement multiple functions, are installed on mobile terminals, meaning that an increasing number of running tasks of applications need to be executed by a processor of the mobile terminal. The processor of the mobile terminal may also have to execute installation tasks of the applications during executing the running tasks. However, an operating system of the mobile terminal does not have an ability of intelligently identifying the installation tasks of the applications, causing that the installation tasks cannot be assigned to effective processor resources for quick executing, thereby reducing an installation speed of the application and further reducing the user experience.

US 8,972,975 B1 relates to a system or method for bounded installation time optimization of applications. The method includes accessing instructions received by the computing device, and dividing those instructions into a plurality of subroutines (also known as functions or methods). A fingerprint for each of the plurality of subroutines is generated. Each fingerprint identifies a plurality of performance scores associated with the plurality of modes of execution of the subroutine on the computing device. One of the plurality of modes of execution may be selected for each of the plurality of subroutines, based on maximizing a total performance score for the plurality of subroutines, and limiting a total installation time of the plurality of subroutines to remain within a determined period of time.

An article titled "Decentralized resource management for multi-core desktop grids" by Jaehwan Lee et al. (2010 IEEE International Symposium on Parallel & Distributed Processing) relates to a decentralized resource management frame-work for exploiting multi-core nodes in peer-to-peer grids. Two new load-balancing schemes that explicitly account for the resource sharing and contention of multiple cores are presented and a simple simulation model that can represent a continuum of resource sharing among cores of a CPU is proposed.

### SUMMARY

A method for assigning an installation task and a mobile terminal are provided, which permit installation tasks of an application to be assigned to effective processor resources for quick executing, therefore improving an installation speed of the application and further improving the user experience. Aspects of the invention are defined in the independent claims. Further features of certain embodiments of the invention are defined in the dependent claims.

### BRIEF DESCRIPTION OF THE DRAWINGS

To illustrate technical solutions embodied by the embodiments of the present disclosure more clearly, the following briefly introduces the accompanying drawings required for describing the embodiments.
FIG. 1 is a schematic flow chart illustrating a method for assigning an installation task in related art.
FIG. 2 is a schematic flow chart illustrating a method for assigning an installation task according to an embodiment of the disclosure.
FIG. 3 is a block diagram illustrating functional units of an apparatus for assigning an installation task according to an embodiment of the disclosure.
FIG. 4 is a schematic structural diagram illustrating a mobile terminal according to an embodiment of the disclosure.
FIG. 5 is a schematic structural diagram illustrating another mobile terminal according to an embodiment of the disclosure.

### DETAILED DESCRIPTION

Hereinafter, technical solutions embodied in embodiments of the disclosure will be described in a clear and comprehensive manner in conjunction with the accompanying drawings. It is evident that the embodiments described herein are merely some rather than all of the embodiments of the disclosure. Those of ordinary skill in the art will be able to derive other embodiments based on these embodiments without creative work, and all such derived embodiments shall fall in the protection scope of the disclosure.

The terms "first" and "second" used in the specification, the claims, and the accompany drawings of the present disclosure are used to distinguish different objects rather than describe a particular order. The terms "include", "comprise", and "have" as well as variations thereof are intended to cover non-exclusive inclusion. For example, a process, method, system, product, or apparatus including a series of steps or units is not limited to the listed steps or units, on the contrary, it can optionally further include other steps or units that are not listed; alternatively, other steps or units inherent to the process, method, product, or device can be included either.

The term "embodiment" or "implementation" referred to herein means that a particular feature, structure, or characteristic described in connection with the embodiment may be contained in at least one embodiment of the present disclosure. The phrase appearing in various places in the specification does not necessarily refer to the same embodiment, nor does it refer an independent or alternative embodiment that is mutually exclusive with other embodiments. It is expressly and implicitly understood by those skilled in the art that an embodiment described herein may be combined with other embodiments.

The following describes the method embodiments of the present disclosure in detail.

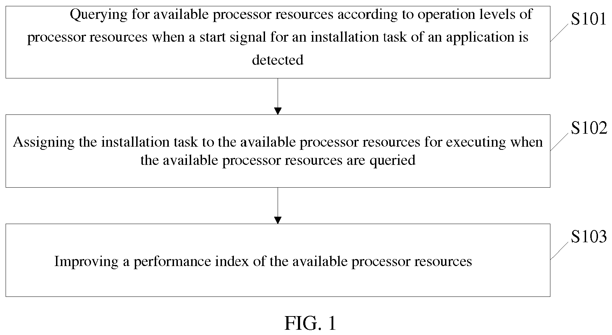

Referring to FIG. 1, FIG. 1 is a schematic flow chart illustrating a method for assigning an installation task according to an embodiment of the disclosure. The method can be implemented by a mobile terminal. As illustrated in FIG. 1, the method starts at S101.

At S101, available processor resources are queried according to operation levels of processor resources in response to a start signal for an installation task of an application detected.

In one implementation, when the start signal for the installation task of the application is detected, the available processor resources can be queried in descending order of the operation levels of the processor resources. In particular, the expression of detecting the start signal for the installation task of the application may refer to detecting a start signal for starting an installation process of the application, or may refer to detecting an acknowledgement signal for starting the installation task of the application from a user, where the acknowledgement signal can be deemed as the start signal for the installation task of the application. After any kind of the foregoing start signal is detected, the available processor resources can be queried according to the operation levels of the processor resources. In one implementation, processor resources with a higher operation level can be first queried. When available resources of the processor resources with the higher operation level are able to execute the installation task, the processor resources with the higher operation level can be determined as the available processor resource. Otherwise, when the available resources of the processor resources with the higher operation level are not sufficient to execute the installation task, continue to query processor resources with other operation levels to obtain processor resources that can currently execute the installation task. In one implementation, processor resources with an operation level corresponding to the load amount of the installation task can be determined according to the load amount of the installation task, for example, the smaller the load amount of the installation task, the lower the operation level of the processor resource. In one implementation, query for available resources of processor resources with an operation level corresponding to the load amount. When the processor resources with the operation level corresponding to the load amount cannot handle the load amount, processor resources with other operation levels can be further queried. There is no doubt that processor resources with higher operation levels can be queried first either. Available processor resources can be queried in other manners and the disclosure is not limited thereto. It should be noted that the processor resources described in the embodiments of the disclosure may include at least one core processing unit. Core processing units of the processor resources can be integrated into the same processor or may be configured at different processors. Core processing units of the same processor resources may have the same or different operation levels. For example, in the processor resource, a core processing unit having a better operation capability will accordingly have a higher operation level.

At S102, the installation task is assigned to the available processor resources for executing when the available processor resources are queried.

In one implementation, when the available processor resources are queried, the installation task can be assigned to the available processor resources queried for executing. In particular, when the available processor resources are queried, it indicates that the available processor resources can carry the load amount of the installation task. Then the installation task can be assigned to the available processor resources for executing.

At S103, a performance index of the available processor resources is improved.

In one implementation, after the installation task is assigned to the available processor resources for executing, the performance index of the available processor resources can be improved. In one implementation, the performance index of the available processor resources can be improved by increasing the number of core processing units of the available processor resource, by increasing a clock frequency (dominant Frequency, also known as clock speed) of at least one core processing unit of the available processor resources to improve the performance of the available processor resources, or by turning off a low power mode for the available processor resources to improve the performance thereof when the available processor resources are currently in the low power mode, such that the installation task can be executed quickly. Moreover, improving of the performance index of the available processor resources can also be achieved through a combination of one or more manners described above. In one implementation, before improving the performance index of the available processor resource, a performance index to-be-adjusted of the available processor resources can be determined. For example, if the core processing units are not fully used, the number of core processing units can be determined as the performance index to-be-adjusted. Still another example, if a clock frequency of the available processor resources has not been adjusted to the highest value, the clock frequency may be determined as the performance index to-be-adjusted. After the performance index to-be-adjusted is determined, it can be increased to improve the performance of the available processor resource.

It is to be noted that when the available processor resources are queried, this is no limit to the execution manner such as the sequence of operations at S102 and at S103. For example, when the available processor resources are queried, the performance index of the available processor resources can be increased first and then the installation task is assigned to the available processor resources for executing. Alternatively, the operations at S102 and at S103 can be performed in parallel, or the performance index of the available processor resources can be improved after the installation task is assigned to the available processor resources for executing. In one implementation, after the installation task is assigned to the available processor resource, further monitor a moment at which the available processor resources are about to execute the installation task. When the moment comes, improve the performance of the available processor resource, improve the performance of the available processor resource. In this way, power consumption of the processor resources can be reduced under the premise of ensuring fast executing of installation tasks.

According to embodiments of the disclosure, when the start signal for the installation task of the application is detected, the available processor resources are queried according to the operation levels of the processor resources. The installation task is assigned to the available processor resources for executing when the available processor resources are queried. The performance index of the available processor resources is improved. As such, available processor resources can be reasonably allocated to the installation task and an executing speed of the installation task can be improved. In addition, the executing speed of the installation task can be further improved by improving the performance index of the available processor resources. In this way, the installation task of the application can be assigned to effective processor resources for quick executing, thereby improving the installation speed of the application and further improving user experience.

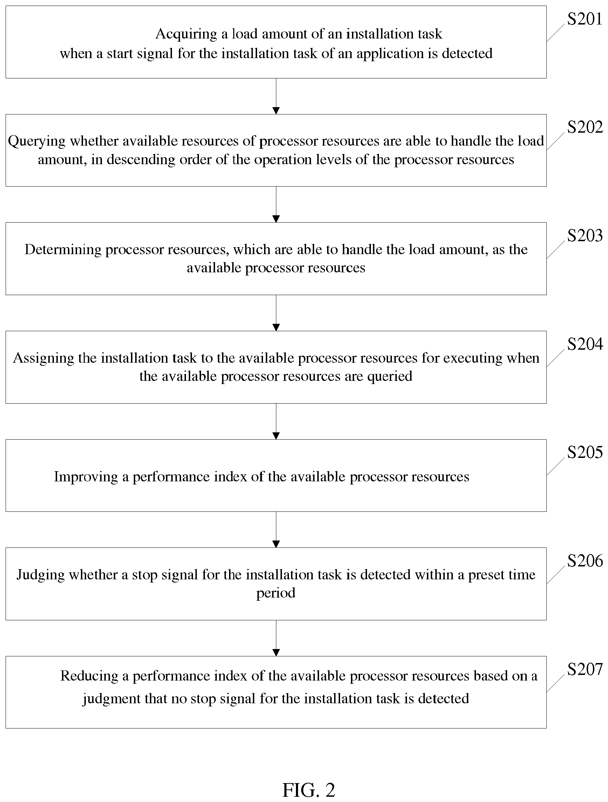

Referring to FIG. 2, FIG. 2 is a schematic flow chart illustrating a method for assigning an installation task according to an embodiment of the disclosure. The method can be implemented by a mobile terminal. As illustrated in FIG. 2, the method starts at S201.

At S201, in response to a start signal for an installation task of an application detected, a load amount of the installation task is acquired.

In one implementation, when the start signal for the installation task of the application is detected, the load amount of the installation task can be acquired. In particular, the expression of detecting the start signal for the installation task of the application may refer to detecting a start signal for starting an installation process of an application, or may refer to detecting an acknowledgement signal for starting the installation task of the application started from a user, where the acknowledgement signal can be deemed as the start signal for the installation task of the application. After any kind of the foregoing start signal is detected, the load amount of the installation task can be acquired. Processor resources corresponding to the installation task can be determined according to the load amount of the installation task. The load amount of the installation task is associated with available resources, residual amount of processor resources, or operation capability of the processor resources.

At S202, whether available resources of the processor resources are able to handle the load amount is queried, in descending order of the operation levels of the processor resources.

In one implementation, after the load amount of the installation task is acquired, whether the available resources of the processor resources are able to handle the load amount is queried, in descending order of operation levels of the processor resources for example. In particular, operation levels of the processor resources can be determined according to operation capabilities of the processor resources. The better the operation capability, the higher the operation level. The operation capability of the processor resources can be determined according to the number of core processing units and/or operation capability of the core processing units included in the processor resource. A larger number of core processing units included in the processor resources and a better operation capability of the core processing units will lead to a higher operation level of the processor resources. Alternatively, the total amount of tasks to be carried by the core processing units included in the processor resources can be counted. The larger the total amount of tasks, the higher the load amount that the processor resources can handle, and the higher the operation level of the processor resources. The processor resources may be sorted according to the operation levels in advance. When the start signal for the installation task is detected, query available processor resources according to the sorting result. Processor resources with a high operation level will be queried first. Residual amount of the processor resources can be queried and then compared with a load amount of an installation task of an application. When the residual amount of processor resources is greater than the load amount of the installation task of the application, it indicates that the processor resources are available. In this way, the available processor resources can be acquired.

At S203, processor resources, which are able to handle the load amount, are determined as the available processor resources.

In one possible implementation, instead of performing foregoing operations at S201-S203, the following operations can be performed.

A load amount of the installation task is acquired. Whether available resources of processor resources with an operation level corresponding to the load amount are able to handle the load amount is judged. The processor resources with the operation level corresponding to the load amount are determined as the available processor resources based on a judgment that the available resources of the processor resources with the operation level corresponding to the load amount are able to handle the load amount. Whether available resources of processor resources with other operation levels are able to handle the load amount is queried based on a judgment that the available resources of the processor resources with the operation level corresponding to the load amount are unable to handle the load amount. The processor resources with the other operation levels are determined as the available processor resources when the available resources of the processor resources with the other operation levels are able to handle the load amount.

After the load amount of the installation task is acquired, processor resources corresponding to the load amount can be determined, specifically, processor resources with an operation level corresponding to the load amount are determined. For example, if the installation task has a large load amount, the processor resources corresponding thereto will have a higher operation level. In one implementation, first determine whether the processor resources with the operation level corresponding to the load amount are available, that is, are able to handle the load amount. When the processor resources with the operation level corresponding to the load amount are unable to handle the load amount, further query whether processor resources of other operation levels are able to handle the load amount. For example, residual amount of processor resources is compared with the load amount of the installation task. When the residual amount of the processor resources is greater than the load amount, it indicates that the processor resources can carry the load amount of the installation task and therefore, the processor resources are available. In this way, the available processor resources can be determined.

At S204, the installation task is assigned to the available processor resources for executing when the available processor resources are queried.

In one implementation, when the available processor resources are queried, the installation task is assigned to the available processor resources queried for executing. In particular, when the available processor resources are queried, it indicates that the available processor resources can carry the load amount of the installation task. Therefore, the installation task can be assigned to the available processor resources for executing.

At S205, a performance index of the available processor resources is improved.

In one implementation, after the installation task is assigned to the available processor resources for executing, the performance index of the available processor resources can be improved. In one implementation, the performance index of the available processor resources can be improved by increasing the number of core processing units of the available processor resource, or by increasing a clock frequency (main frequency) of at least one core processing unit of the available processor resources to improve the performance of the available processor resource, or by turning off a low power mode for the available processor resources to improve the performance thereof when the available processor resources are currently in the low power mode, such that the installation task can be executed quickly. Moreover, improving of the performance index of the available processor resources can also be achieved through a combination of one or more manners described above. In one implementation, before improving the performance index of the available processor resource, a performance index to-be-adjusted of the available processor resources can be determined. For example, if the core processing units are not fully used, the number of core processing units can be used as the performance index to-be-adjusted. Still another example, if a clock frequency of the available processor resources has not been adjusted to the highest value, the clock frequency may be determined as the performance index to-be-adjusted. After the performance index to-be-adjusted is determined, it can be increased to improve the performance of the available processor resources.

It is to be noted that when the available processor resources are queried, this is no limit to the execution sequence of operations at S204 and S205. For example, when the available processor resources are queried, the performance index of the available processor resources can be increased first and then the installation task is assigned to the available processor resources for executing. Alternatively, the operations at S204 and S205 can be performed in parallel, or the performance index of the available processor resources can be improved after the installation task is assigned to the available processor resources for executing. In one implementation, after the installation task is assigned to the available processor resources, further monitor a moment at which the available processor resources are about to execute the installation task. When the moment comes, improve the performance of the available processor resource, improve the performance of the available processor resources. In this way, power consumption of the available processor resources can be reduced under the premise of ensuring fast executing of installation tasks. In one implementation, after the installation task is assigned to the available processor resources, if a clock frequency of the available processor resources to be adjusted can be determined, then at least one core processing unit configured to execute the installation task can be determined; further, an increase in the clock frequency corresponding to the load amount can be determined according to the load amount of the installation task. A correspondence between the increase in the clock frequency and the load amount of the installation task can be stored in the mobile terminal in advance. Based on this, a clock frequency of the at least one core processing unit can be improved according to the increase in the clock frequency determined. When there are multiple core processing units for executing the installation task, for each core processing unit, the increase in the clock frequency can be determined according to a load amount assigned thereto. That is to say, an increase in the clock frequency for each core processing unit can be the same or different.

At S206, whether a stop signal for the installation task is detected within a preset time period is judged.

In one implementation, after the performance index of the available processor resources is improved and the installation task is executed, further judge whether the stop signal for the installation task is detected within a preset time period. The stop signal may be a stop signal issued after the installation task is completed. When no stop signal is detected within the preset rime period, it indicates that the installation task fails or no stop signal is normally issued after the installation task is completed. In such a situation, the performance index of the available processor resources can be reduced at the end of the preset time period, so as to avoid excessive power consumption caused by improving the performance of the available processor resources for a long time. On the contrary, when the stop signal is detected within the preset time period, it indicates that the available processor resources have completed the execution of the installation task and the performance index of the available processor resources can be restored or reduced according to the current load amount. In one implementation, a detection timer may be set and the existence or reception of above stop signal can be monitored within a timing period of the detection timer. If no stop signal is monitored during the timing period of the detection timer, it can be considered that no stop signal is detected.

At S207, when no stop signal is detected, the performance index of the available processor resources is reduced.

In one implementation, when no stop signal is detected, the performance index of the available processor resources is reduced to avoid power consumption of the available processor resources. In one implementation, the performance index of the available processor resources is reduced as follows. The performance index of the available processor resources can be restored to the one before the increase (that is, before the improving at S205). For example, if available processor resources before increase are in a low power mode, then reducing the performance index of the available processor resources may refer to restoring the available processor resources to the low power mode. In another case, a current load amount that is currently handled by the available processor resources may be first detected, then the performance index to-be-adjusted of the available processor resources may be determined according to the current load amount, and further an adjustment amount of the performance index to-be-adjusted may be determined according to the current load amount, such that the performance index to-be-adjusted can be adjusted according to the adjustment amount determined. In one implementation, the current load amount that is currently handled by the available processor resources is detected, and whether all core processing units that are currently running in the available processor resources are processing loads is determined. When there is a core processing unit(s) that is currently running but not processing loads, or there is a core processing unit(s) that is processing small loads, determine a clock frequency or a power consumption state of the core processing unit as the performance index to-be-adjusted. In this way, the clock frequency or the power consumption state of the core processing unit can be reduced. When the core processing unit is processing small loads, the adjustment amount can be determined according to the load amount of the loads that is currently handled by the core processing unit.

According to the embodiments of the disclosure, when the start signal for the installation task of the application is detected, the available processor resources are queried according to the operation levels of the processor resources. The installation task is assigned to the available processor resources for executing when the available processor resources are queried. The performance index of the available processor resources is improved. As such, available processor resources can be reasonably allocated to the installation task and an executing speed of the installation task can be improved. In addition, the executing speed of the installation task can be quickly increased by improving the performance index of the processor resource. In this way, the installation task of the application can be assigned to effective processor resources for quick executing, thereby improving the installation speed of the application and further improving the user experience.

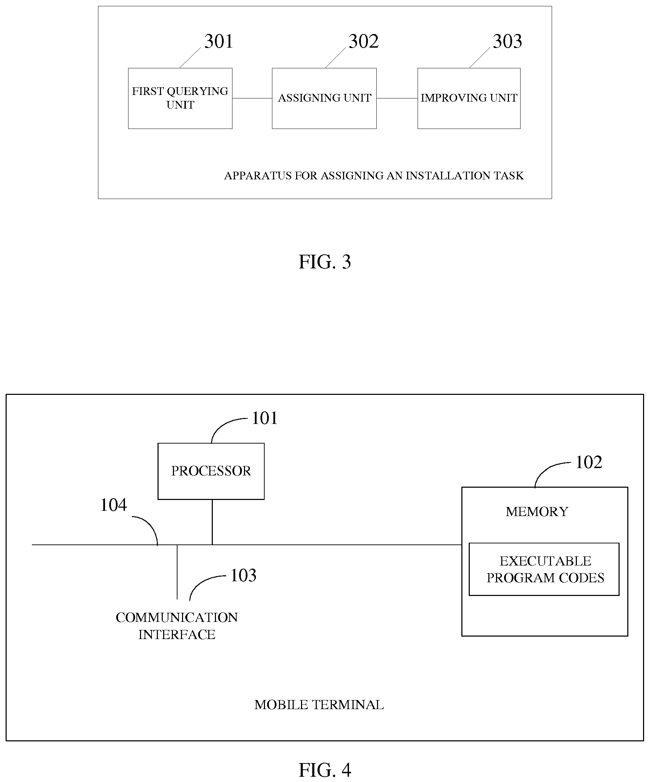

Referring to FIG. 3, FIG. 3 is a block diagram illustrating functional units of an apparatus for assigning an installation task according to an embodiment of the disclosure. The apparatus includes a first querying unit 301, an assigning unit 302, and an improving unit 303.

The first querying unit 301 is configured to query for available processor resources according to operation levels of processor resources in response to a start signal for an installation task of an application detected.

The assigning unit 302 is configured to assign the installation task to the available processor resources for executing, when the first querying unit 301 queries the available processor resources.

The improving unit 303 is configured to improve a performance index of the available processor resources.

In one implementation, the first querying unit 301 includes a first acquiring unit, a second querying unit, and a first determining unit. The first acquiring unit is configured to acquire a load amount of the installation task. The second querying unit is configured to query whether available resources of the processor resources are able to handle the load amount, in descending order of the operation levels of the processor resources. The first determining unit is configured to determine processor resources as the available processor resources when the second querying unit queries that the processor resources are able to handle the load amount.

In another implementation, the first querying unit includes a second acquiring unit, a first judging unit, a second determining unit, a third querying unit, and a third determining unit. The second acquiring unit is configured to acquire a load amount of the installation task. The first judging unit is configured to judge whether available resources of processor resources with an operation level corresponding to the load amount are able to handle the load amount. The second determining unit is configured to determine the processor resources with the operation level corresponding to the load amount as the available processor resources when the first judging unit judges that the available resources of the processor resources with the operation level corresponding to the load amount are able to handle the load amount. The third querying unit is configured to query whether available resources of processor resources with other operation levels are able to handle the load amount when the first judging unit judges that the available resources of the processor resources with the operation level corresponding to the load amount are unable to handle the load amount. The third determining unit is configured to determine the processor resources with the other operation levels as the available processor resources when the third querying unit queries that the available resources of the processor resources with the other operation levels are able to handle the load amount.

In one implementation, the improving unit configured to improve the performance index of the available processor resources is configured to: increase the number of core processing units of the available processor resources; or turn off a low power mode for the available processor resources; or increase a clock frequency of the available processor resources according to the load amount of the installation task.

In one implementation, the improving unit configured to increase the clock frequency of the available processor resources according to the load amount of the installation task is configured to: determine an increase in a clock frequency corresponding to the load amount according to the load amount of the installation task; determine, from among the available processor resources, at least one core processing unit configured to execute the installation task; adjust a clock frequency of the at least one core processing unit according to the increase in the clock frequency.

In one implementation, the apparatus further includes a second judging unit and a reducing unit. The second judging unit is configured to judge whether a stop signal for the installation task is detected within a preset time period after the improving unit improves the performance index of the available processor resources. The reducing unit is configured to reduce a performance index of the available processor resources when the second judging unit judges that no stop signal for the installation task is detected.

In one implementation, the reducing unit configured to reduce the performance index of the available processor resources is configured to: detect a current load amount that is currently handled by the available processor resources; determine a performance index to-be-adjusted for the available processor resources according to the current load amount and determine an adjustment amount of the performance index to-be-adjusted; adjust the performance index to-be-adjusted according to the adjustment amount.

According to the embodiments of the disclosure, when the start signal for the installation task of the application is detected, the available processor resources are queried according to the operation levels of the processor resources. The installation task is assigned to the available processor resources for executing when the available processor resources are queried. The performance index of the available processor resources is improved. As such, available processor resources can be reasonably allocated to the installation task and an executing speed of the installation task can be improved. In addition, the executing speed of the installation task can be quickly improved by improving the performance index of the available processor resources. In this way, the installation task of the application can be assigned to effective processor resources for quick executing, thereby improving the installation speed of the application and further improving the user experience.

Embodiments of the disclosure provide a mobile terminal. As illustrated in FIG. 4, the mobile terminal includes a processor 101, a memory 102, a communication interface 103, and a communication bus 104. The processor 101, the memory 102, and the communication interface 103 are coupled and communicate with each other though the communication bus 104. The processor 101 controls wireless communication with an external cellular network through the communication interface 103. The communication interface 103 includes but is not limited to an antenna, an amplifier, a transceiver, a coupler, a low noise amplifier (LNA), a duplexer and the like. In addition, the memory 102 may include at least one of a random access memory (RAM), a non-volatile memory, and an external memory. The memory 102 is configured to store executable program codes and the executable program codes can guide the processor 101 to perform the method for assigning an installation task disclosed in the method embodiments of the present disclosure, where the method includes the following operations.

The processor 101 is configured to query for available processor resources according to operation levels of processor resources in response to a start signal for an installation task of an application detected. The processor 101 is configured to assign the installation task to the available processor resources for executing when the available processor resources are queried. The processor 101 is configured to improve a performance index of the available processor resources.

According to the embodiment of the disclosure, when the start signal for the installation task of the application is detected, the available processor resources are queried according to the operation levels of the processor resources. The installation task is assigned to the available processor resources for executing when the available processor resources are queried. The performance index of the available processor resources is improved. As such, the installation task can be reasonably assigned to processor resources and an executing speed of the installation task can be improved. In addition, the executing speed of the installation task can be quickly improved by improving the performance index of the available processor resources. In this way, the installation task of the application can be assigned to effective processor resources for quick executing, thereby improving the installation speed of the application and further improving the user experience.

In addition, the executable program codes stored in the memory 102 are configured to perform related operations of the method illustrated in FIG. 2 above, which will not be repeated herein again.

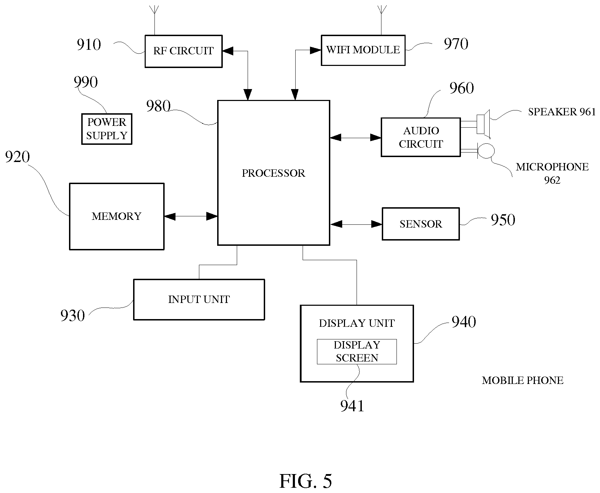

Embodiments of the disclosure also provide another mobile terminal. As illustrated in FIG. 5, only parts related to the embodiment of the disclosure are illustrated for the convenience of description. For technical details not described, reference may be made to the method embodiments of the present disclosure. The mobile terminal may be any terminal device, such as a mobile phone, a tablet PC, a personal digital assistant (PDA), a point of sale terminal (POS), an on-board computer, and the like. The following describes a mobile phone as an example of the mobile terminal.

FIG. 5 is a block diagram illustrating a partial structure of a mobile phone related to a mobile terminal according to an embodiment of the disclosure. Referring to FIG. 5, the mobile phone includes a radio frequency (RF) circuit 910, a memory 920, an input unit 930, a display unit 940, a sensor 950, an audio circuit 960, a wireless fidelity (Wi-Fi) module 970, a processor 980, and a power supply 990 and other components. Those skilled in the art can understand that the structure of the mobile phone illustrated in FIG. 5 does not constitute any limitation on a mobile phone. The mobile phone configured to implement technical solutions of the disclosure may include more or fewer components than illustrated, or may combine certain components or different components.

In the following, various components of the mobile phone will be described in detail with reference to FIG. 5.

The RF circuit 910 is configured to receive or transmit information. Generally, the RF circuit 910 includes but is not limited to an antenna, at least one amplifier, a transceiver, a coupler, a low noise amplifier (LNA), a duplexer and the like. In addition, the RF circuit 910 may also communicate with the network or other devices via wireless communication. The above wireless communication may use any communication standard or protocol, which includes but is not limited to global system of mobile communication (GSM), general packet radio service (GPRS), code division multiple access (CDMA), wideband code division multiple access (WCDMA), long term evolution (LTE), E-mail, short messaging service (SMS) and so on.

The memory 920 is configured to store software programs and modules. The processor 980 is configured to execute various function applications and data processing of the mobile phone by running the software programs and the modules stored in the memory 920. The memory 920 may mainly include a program storage area and a data storage area. The program storage area may store an operating system, applications required for at least one function, and the like. The data storage area may store data created according to the use of the smart phone, and the like. In addition, the memory 920 may include a high-speed random access memory (RAM), and may further include a non-transitory memory such as at least one disk storage device, a flash device, or other non-transitory solid storage devices.

The input unit 930 is configured to receive input digital or character information and generate key signal input associated with user setting and function control of the mobile phone. The input unit 930 may include at least one of a physical keyboard, a function key (such as a volume control key, a switch key, etc.), a trackball, a mouse, a joystick, and a fingerprint recognition module and the like.

The display unit 940 is configured to display information input by a user or information provided for the user or various menus of the mobile phone. The display unit 940 may include a display screen 941. Alternatively, the display screen 941 may be in the form of a liquid crystal display (LCD), an organic light-emitting diode (OLED) and so on.

The mobile phone may further include at least one sensor 950, such as a light sensor, a motion sensor, and other sensors. As one implementation, the light sensor may include an ambient light sensor and a proximity sensor, among which the ambient light sensor may adjust brightness of the display screen 941 according to ambient lights. The proximity sensor may turn off the display screen 941 and/or backlight when the mobile phone reaches nearby the ear. As a kind of the motion sensor, a accelerometer sensor can detect the magnitude of acceleration in all directions (typically three axes) and when the mobile phone is stationary, the accelerometer sensor can detect the magnitude and direction of gravity; the accelerometer sensor can also identify mobile-phone gestures related the applications (such as vertical and horizontal screen switch, related games, magnetometer attitude calibration), or the accelerometer sensor can be used for vibration-recognition related functions (such as a pedometer, percussion) and so on. The mobile phone can also be equipped with a gyroscope, a barometer, a hygrometer, a thermometer, and an infrared sensor and other sensors, and it will not be repeated herein.

The audio circuit 960, a speaker 961, and a microphone 962 may provide an audio interface between the user and the mobile phone. The audio circuit 960 may convert the received audio data into electrical signals and transfer the electrical signals to the speaker 961; thereafter the speaker 961 converts the electrical signals into sound signals to output. On the other hand, the microphone 962 converts the received sound signals into electrical signals, which will be received and converted into audio data by the audio circuit 960 to output. The audio data is then processed and transmitted by the general-purpose processor 980 via the RF circuit 910 to another mobile phone for example, or, the audio data is output to the memory 920 for further processing.

W i-Fi belongs to a short-range wireless transmission technology. With aid of the Wi-Fi module 970, the mobile phone may assist the user in E-mail receiving and sending, webpage browsing, access to streaming media and the like. Wi-Fi provides users with wireless broadband Internet access. Although the Wi-Fi module 970 is illustrated in FIG.5, it should be understood that the Wi-Fi module 970 is not essential to the mobile phone and can be omitted according to actual needs without departing from the essential nature of the present disclosure.

The processor 980 is a control center of the mobile phone. The processor 980 is configured to connect various parts of the entire smart phone through various interfaces and lines, run or execute software programs and/or modules stored in the memory 920, and invoke data stored in the memory 920, to execute various functions of the smart phone and process data, thereby monitoring the smart phone as a whole. In at least one implementation, the processor 980 may include at least one processing unit. For example, the processor 980 can be integrated with an application processor and a modem processor, where the application processor is mainly configured to handle and maintain an operating system, a user interface, applications, and so on. The modem processor is mainly configured to process wireless communication. It will be appreciated that the above-mentioned modem processor mentioned above may not be integrated into the processor 980.

The mobile phone also includes a power supply 990 (e.g., a battery) that supplies power to various components. For instance, the power supply 990 may be logically connected to the processor 980 via a power management system to enable management of charging, discharging, and power consumption through the power management system.

Although not illustrated, the mobile phone may further include a camera, a Bluetooth module, etc., and the disclosure will not elaborate herein.

In the foregoing embodiment illustrated in FIG. 1 or FIG. 2, the process flow of each method may be implemented based on the structure of the mobile phone.

In the foregoing embodiment illustrated in FIG. 3, each unit function can be implemented based on the structure of the mobile phone.

Embodiments of the present disclosure also provide a computer storage medium. The computer storage medium stores programs which, when executed, are operable to accomplish all or part of the operations of any of the methods described in the above-described method embodiment.

It is to be noted that, for the sake of simplicity, the foregoing method embodiments are described as a series of action combinations, however, it will be appreciated by those skilled in the art that the present disclosure is not limited by the sequence of actions described. According to the present disclosure, certain steps or operations may be performed in other order or simultaneously. Besides, it will be appreciated by those skilled in the art that the embodiments described in the specification are exemplary embodiments and the actions and modules involved are not necessarily essential to the present disclosure.

In the foregoing embodiments, the description of each embodiment has its own emphasis. For the parts not described in detail in one embodiment, reference may be made to related descriptions in other embodiments.

In the embodiments of the disclosure, it should be understood that, the apparatus disclosed in embodiments provided herein may be implemented in other manners. For example, the device/apparatus embodiments described above are merely illustrative; for instance, the division of the unit is only a logical function division and there can be other manners of division during actual implementations, for example, multiple units or components may be combined or may be integrated into another system, or some features may be ignored, omitted, or not performed. In addition, coupling or communication connection between each illustrated or discussed component may be direct coupling or communication connection, or may be indirect coupling or communication among devices or units via some interfaces, and may be electrical connection, mechanical connection, or other forms of connection.

The units described as separate components may or may not be physically separated, the components illustrated as units may or may not be physical units, that is, they may be in the same place or may be distributed to multiple network elements. All or part of the units may be selected according to actual needs to achieve the purpose of the technical solutions of the embodiments.

In addition, the functional units in various embodiments of the present disclosure may be integrated into one processing unit, or each unit may be physically present, or two or more units may be integrated into one unit. The above-mentioned integrated unit can be implemented in the form of hardware or a software functional unit.

The integrated unit may be stored in a computer-readable memory when it is implemented in the form of a software functional unit and is sold or used as a separate product. Based on such understanding, the technical solutions of the present disclosure essentially, or the part of the technical solutions that contributes to the related art, or all or part of the technical solutions, may be embodied in the form of a software product which is stored in a memory and includes instructions for causing a computer device (which may be a personal computer, a server, or a network device and so on) to perform all or part of the steps described in the various embodiments of the present disclosure. The memory includes various medium capable of storing program codes, such as a USB (universal serial bus) flash disk, a read-only memory (ROM), a random access memory (RAM), a removable hard disk, Disk, compact disc (CD), or the like.

It will be understood by those of ordinary skill in the art that all or a part of the various methods of the embodiments described above may be accomplished by means of a program to instruct associated hardware, the program may be stored in a computer-readable memory, which may include a flash memory, a read-only memory (ROM), a random-access memory (RAM), a disk or a compact disc (CD), and so on.

While the present disclosure has been described in detail above with reference to the exemplary embodiments, the scope of the present disclosure is not limited thereto. As will occur to those skilled in the art, the present disclosure is susceptible to various modifications and changes without departing from the principle of the present disclosure. Therefore, the scope of the present disclosure should be determined by the scope of the claims.

## Claims

1. A method for assigning an installation task to processor resources of a mobile terminal, the method comprising:
acquiring a load amount of the installation task; and
**characterised by**:
judging whether or not available processor resources with an operational capability corresponding to the load amount are able to handle the load amount;
based on a judgement that the available processor resources are able to handle the load amount, determining those available processor resources as available processor resources for the installation task;
based on a judgement that the available processor resources are unable to handle the load amount, querying whether available processor resources with other operational capabilities are able to handle the load amount;
if the available processor resources with the other operational capabilities are able to handle the load amount, determining those available processor resources as the available processor resources for the installation task;
assigning (S102) the installation task to the available processor resources for the installation task for executing when the available processor resources for the installation task are queried; and
improving (S103) a performance index of the available processor resources for the installation task.

2. The method of claim 1, wherein the improving a performance index of the available processor resources for the installation task comprises one of:
increasing the number of core processing units of the available processor resources for the installation task;
turning off a low power mode for the available processor resources for the installation task; and
increasing a clock frequency of the available processor resources for the installation task according to the load amount of the installation task.

3. The method of claim 2, wherein the increasing a clock frequency of the available processor resources for the installation task according to the load amount of the installation task comprises:
determining an increase in a clock frequency corresponding to the load amount;
determining, from among the available processor resources for the installation task, at least one core processing unit configured to execute the installation task; and
adjusting a clock frequency of the at least one core processing unit, according to the increase in the clock frequency.

4. The method of claim 2, wherein the method further comprises the follows after the improving a performance index of the available processor resources for the installation task:
judging (S206) whether a stop signal for the installation task is detected within a preset time period; and
reducing (S207) the performance index of the available processor resources for the installation task based on a judgment that no stop signal for the installation task is detected.

5. The method of claim 4, wherein the reducing a performance index of the available processor resources for the installation task comprises:
detecting a current load amount that is currently handled by the available processor resources for the installation task;
determining a performance index to-be-adjusted for the available processor resources for the installation task according to the current load amount and determining an adjustment amount of the performance index to-be-adjusted; and
adjusting the performance index to-be-adjusted according to the adjustment amount.

6. The method of claim 1, wherein the available processor resources for the installation task comprise at least one core processing unit configured to execute tasks.

7. The method of claim 1, wherein the performance index comprises at least one of the number of core processing units, a low power mode, and a clock frequency.

8. A mobile terminal, comprising:
a processor (101); and
a memory (102), configured to store executable program codes;
the processor being configured to invoke the executable program codes stored in the memory to perform the method of any of claims 1 to 7.

9. A computer-readable storage medium, being configured to store instructions which, when executed by a computer, are operable with the computer to perform the method of any of claims 1 to 7.

## Patentansprüche

1. Verfahren zur Zuweisung einer Installationsaufgabe an Prozessorressourcen eines mobilen Endgerätes, das Verfahren Folgendes umfassend:
Erfassen eines Lastbetrags der Installationsaufgabe; und
**gekennzeichnet durch**:
Beurteilen, ob die verfügbaren Prozessorressourcen mit einer dem Lastbetrag entsprechenden Betriebsfähigkeit in der Lage sind, den Lastbetrag zu bewältigen;
basierend auf einer Beurteilung, dass die verfügbaren Prozessorressourcen in der Lage sind, den Lastbetrag zu bewältigen, Bestimmen dieser verfügbaren Prozessorressourcen als verfügbare Prozessorressourcen für die Installationsaufgabe;
basierend auf einer Beurteilung, dass die verfügbaren Prozessorressourcen nicht in der Lage sind, den Lastbetrag zu bewältigen, Abfragen, ob die verfügbaren Prozessorressourcen mit anderen Betriebsfähigkeiten in der Lage sind, den Lastbetrag zu bewältigen;
falls die verfügbaren Prozessorressourcen mit den anderen Betriebsfähigkeiten in der Lage sind, den Lastbetrag zu bewältigen, Bestimmen dieser verfügbaren Prozessorressourcen als die verfügbaren Prozessorressourcen für die Installationsaufgabe;
Zuweisen (S102) der Installationsaufgabe zu den verfügbaren Prozessorressourcen für die Installationsaufgabe zur Ausführung, wenn die verfügbaren Prozessorressourcen für die Installationsaufgabe abgefragt werden; und
Verbessern (S103) eines Leistungsindex der verfügbaren Prozessorressourcen für die Installationsaufgabe.

2. Verfahren nach Anspruch 1, wobei das Verbessern eines Leistungsindex der verfügbaren Prozessorressourcen für die Installationsaufgabe einen der folgenden Punkte umfasst:
Erhöhen der Anzahl von zentralen Verarbeitungseinheiten der verfügbaren Prozessorressourcen für die Installationsaufgabe;
Ausschalten eines Energiesparmodus für die verfügbaren Prozessorressourcen für die Installationsaufgabe; und
Erhöhen einer Taktfrequenz der verfügbaren Prozessorressourcen für die Installationsaufgabe gemäß dem Lastbetrag der Installationsaufgabe.

3. Verfahren nach Anspruch 2, wobei das Erhöhen einer Taktfrequenz der verfügbaren Prozessorressourcen für die Installationsaufgabe gemäß dem Lastbetrag der Installationsaufgabe Folgendes umfasst:
Bestimmen einer Erhöhung einer Taktfrequenz entsprechend dem Lastbetrag;
Bestimmen, unter den verfügbaren Prozessorressourcen für die Installationsaufgabe, von mindestens einer zentralen Verarbeitungseinheit, die dazu ausgelegt ist, die Installationsaufgabe auszuführen; und
Einstellen einer Taktfrequenz der mindestens einen zentralen Verarbeitungseinheit gemäß der Erhöhung der Taktfrequenz.

4. Verfahren nach Anspruch 2, wobei das Verfahren nach der Verbesserung eines Leistungsindex der verfügbaren Prozessorressourcen für die Installationsaufgabe ferner das Folgende umfasst:
Beurteilen (S206), ob ein Stoppsignal für die Installationsaufgabe innerhalb eines vorgegebenen Zeitraums erkannt wird; und
Reduzieren (S207) des Leistungsindex der verfügbaren Prozessorressourcen für die Installationsaufgabe,
basierend auf einer Beurteilung, dass kein Stoppsignal für die Installationsaufgabe erkannt wird.

5. Verfahren nach Anspruch 4, wobei das Reduzieren eines Leistungsindex der verfügbaren Prozessorressourcen für die Installationsaufgabe Folgendes umfasst:
Erkennen eines aktuellen Lastbetrags, der gegenwärtig durch die verfügbaren Prozessorressourcen für die Installationsaufgabe bewältigt wird;
Bestimmen eines Leistungsindex, der für die verfügbaren Prozessorressourcen für die Installationsaufgabe gemäß dem aktuellen Lastbetrag anzupassen ist, und Bestimmen eines Anpassungsbetrags des anzupassenden Leistungsindex;
und
Anpassen des anzupassenden Leistungsindex gemäß dem Anpassungsbetrag.

6. Verfahren nach Anspruch 1, wobei die verfügbaren Prozessorressourcen für die Installationsaufgabe mindestens eine zentrale Verarbeitungseinheit umfassen, die zum Ausführen von Aufgaben ausgelegt ist.

7. Verfahren nach Anspruch 1, wobei der Leistungsindex mindestens einen Posten der Anzahl von zentralen Verarbeitungseinheiten, eines Energiesparmodus und einer Taktfrequenz umfasst.

8. Mobiles Endgerät, Folgendes umfassend:
einen Prozessor (101); und
einen Speicher (102), der dazu ausgelegt ist, ausführbare Programmcodes zu speichern;
wobei der Prozessor dazu ausgelegt ist, die in dem Speicher gespeicherten ausführbaren Programmcodes aufzurufen, um das Verfahren nach einem der Ansprüche 1 bis 7 durchzuführen.

9. Computerlesbares Speichermedium, das dazu ausgelegt ist, Anweisungen zu speichern, die, wenn sie durch einen Computer ausgeführt werden, mit dem Computer funktionsfähig sind, um das Verfahren nach einem der Ansprüche 1 bis 7 durchzuführen.

## Revendications

1. Procédé pour affecter une tâche d'installation à des ressources de processeur d'un terminal mobile, le procédé comprenant :
acquérir une quantité de charge de la tâche d'installation; et
**caractérisé par** le fait de :
juger si des ressources de processeur disponibles avec une capacité opérationnelle correspondant à la quantité de charge sont capables ou non de gérer la quantité de charge;
sur la base d'un jugement selon lequel les ressources de processeur disponibles sont capables de gérer la quantité de charge, déterminer ces ressources de processeur disponibles en tant que ressources de processeur disponibles pour la tâche d'installation;
sur la base d'un jugement selon lequel les ressources de processeur disponibles sont incapables de gérer la quantité de charge, demander si des ressources de processeur disponibles avec d'autres capacités opérationnelles sont capables de gérer la quantité de charge;
si les ressources de processeur disponibles avec les autres capacités opérationnelles sont capables de gérer la quantité de charge, déterminer ces ressources de processeur disponibles en tant que ressources de processeur disponibles pour la tâche d'installation;
affecter (S102) la tâche d'installation aux ressources de processeur disponibles pour la tâche d'installation à exécuter lorsque les ressources de processeur disponibles pour la tâche d'installation sont interrogées; et
améliorer (S103) un indice de performance des ressources de processeur disponibles pour la tâche d'installation.

2. Procédé selon la revendication 1, dans lequel l'amélioration d'un indice de performance des ressources de processeur disponibles pour la tâche d'installation comprend l'un parmi :
augmenter le nombre d'unités centrales de traitement des ressources de processeur disponibles pour la tâche d'installation;
désactiver un mode basse consommation pour les ressources de processeur disponibles pour la tâche d'installation; et
augmenter une fréquence d'horloge des ressources processeur disponibles pour la tâche d'installation en fonction de la quantité de charge de la tâche d'installation.

3. Procédé selon la revendication 2, dans lequel l'augmentation d'une fréquence d'horloge des ressources de processeur disponibles pour la tâche d'installation en fonction de la quantité de charge de la tâche d'installation comprend :
déterminer une augmentation d'une fréquence d'horloge correspondant à la quantité de charge;
déterminer, parmi les ressources de processeur disponibles pour la tâche d'installation, au moins une unité centrale de traitement configurée pour exécuter la tâche d'installation; et
ajuster une fréquence d'horloge de l'au moins une unité centrale de traitement, en fonction de l'augmentation de la fréquence d'horloge.

4. Procédé selon la revendication 2, le procédé comprenant en outre ce qui suit après l'amélioration d'un indice de performance des ressources de processeur disponibles pour la tâche d'installation :
juger (S206) si un signal d'arrêt pour la tâche d'installation est détecté dans une période de temps prédéfinie ; et
réduire (S207) l'indice de performance des ressources de processeur disponibles pour la tâche d'installation sur la base d'un jugement selon lequel aucun signal d'arrêt pour la tâche d'installation n'est détecté.

5. Procédé selon la revendication 4, dans lequel la réduction d'un indice de performance des ressources de processeur disponibles pour la tâche d'installation comprend :
détecter une quantité de charge actuelle qui est actuellement gérée par les ressources de processeur disponibles pour la tâche d'installation;
déterminer un indice de performance à ajuster pour les ressources de processeur disponibles pour la tâche d'installation en fonction de la quantité de charge actuelle et déterminer une quantité d'ajustement de l'indice de performance à ajuster; et
ajuster l'indice de performance à ajuster en fonction de la quantité d'ajustement.

6. Procédé selon la revendication 1, dans lequel les ressources de processeur disponibles pour la tâche d'installation comprennent au moins une unité centrale de traitement configurée pour exécuter des tâches.

7. Procédé selon la revendication 1, dans lequel l'indice de performance comprend au moins l'un du nombre d'unités centrales de traitement, d'un mode basse consommation d'énergie et d'une fréquence d'horloge.

8. Terminal mobile, comprenant :
un processeur (101) ; et
une mémoire (102), configurée pour stocker des codes de programme exécutables;
le processeur étant configuré pour invoquer les codes de programme exécutables stockés dans la mémoire pour exécuter le procédé selon l'une quelconque des revendications 1 à 7.

9. Support de stockage lisible par ordinateur, configuré pour stocker des instructions qui, lorsqu'elles sont exécutées par un ordinateur, peuvent être utilisées avec l'ordinateur pour exécuter le procédé de l'une quelconque des revendications 1 à 7.
